# EUROPEAN PATENT APPLICATION

(11) **EP 2 871 698 A1**
(43) Date of publication of application: **13.05.2015**
(21) Application number: 13192369.0
(22) Date of filing: 11.11.2013
(51) Int. Cl.: H01M 8/04, H01M 8/10

(54) **Method and test station for testing proton exchange membrane electrodes and membrane electrode assemblies**

(71) Applicant: The European Union, represented by the European Commission, 1049 Brussels (BE)
(72) Inventor: Radev, Ivan, 1592 SOFIA (BG); Tsotridis, Georgios, 1816 KH Alkmaar (NL)
(74) Representative: Office Freylinger

(57) **Abstract**

A method for testing proton exchange membrane electrodes and membrane electrode assemblies, comprising: providing a test station (10) having a chamber body (12) with a gas chamber (14, 16) therein; providing at least one cell (22, 22') having a proton exchange membrane (24, 24') sandwiched between two proton exchange membrane electrodes (26, 26', 28, 28'); inserting at least one cell (22, 22') in the gas chamber (14, 16) through an opening in the chamber body (12); hermetically closing the opening in the chamber body (12); feeding hydrogen or oxygen containing gas into the gas chamber (14, 16) via a gas inlet (18, 18') and gas outlet (20, 20') until the desired gas composition is achieved in the gas chamber (14, 16) and hermetically closing the gas inlets and outlets (18, 18', 20, 20') thereafter; connecting the proton exchange membrane electrodes (26, 26', 28, 28') to a circuit (31) comprising a current/voltage source (32); applying a current to the proton exchange membrane electrodes (26, 26', 28, 28'); and measuring the electrodes performance. A test station for carrying out the above method.

## Description

### FIELD OF THE INVENTION

The present invention generally relates to a method for testing PEM (Proton Exchange Membrane) electrodes and MEAs (Membrane Electrode Assemblies). The present invention also relates to a test station for carrying out such tests.

### BACKGROUND OF THE INVENTION

The conventional testing of PEM fuel cells, PEM water electrolyzers and PEM unitized regenerative fuel cells (Proton Exchange Membrane Electrochemical Hydrogen Energy Converters - PEM EHEC) generally requires a heavy, complex and expensive running periphery for continuous conditioning, supply and removal of the gas mixtures and products at conditions and compositions under strict control. Even the simplest single H₂/O₂ test cell includes several differently composed materials and phases: compartments containing hydrogen and oxygen/water gas channels, hydrophobized gas diffusion and current collecting layers, catalytic reaction layers, and PEM as an electrolyte and separator. In fact, PEM fuel cells and water electrolyzers development requires a multi-disciplinary approach comprising knowledge in the field of electrochemistry, material science, mechanical, chemical and electrochemical engineering, etc. Thus, the whole testing process converts to a sophisticated and cumbersome technology.

Cell design and the methodology for establishing and controlling of the optimal working conditions (water and heat management, composition and stoichiometry of the feeding gases, reaction products removal, pressure regulation on both sides of MEA, etc.) of each single cell in the stack depend strongly on the PEM fuel cell and water electrolyzer power and application. The most important element - "the heart" of any PEM EHEC, which mostly determines their performance, durability, and their cost, is the MEA. Furthermore, MEA is the most independent element in terms of EHEC scale, design and application. The dynamics and interdependence of the cell parameters, the difficulties in maintaining the running conditions, typical for conventional test cells, are the main hindrances for a deeper understanding of the driving reactions and degradation mechanisms in MEA. Thus, the electrochemical testing of MEA's active materials, electrode structures and preparation procedures requires conception, development and implementation of a harmonized, reliable, preferably standardized, fast and easy accessible screening technology.

### OBJECTIVE OF THE INVENTION

The objective of the present invention is to provide a method for testing PEM electrodes and MEAs in a reliable, quick and in a cost effective manner. This objective is achieved by a method according to claim 1. Another objective of the present invention is to provide a test station wherein PEM electrodes and MEAs can be tested. This objective is achieved by a test station according to claim 10.

### SUMMARY OF THE INVENTION

The present invention proposes a method for testing proton exchange membrane electrodes and membrane electrode assemblies, the method comprising the steps of:
providing a test station having a chamber body with a gas chamber therein;
providing at least one cell having a proton exchange membrane sandwiched between two proton exchange membrane electrodes;
inserting at least one cell in the gas chamber through an opening in the chamber body;
hermetically closing the opening in the chamber body;
feeding hydrogen or oxygen containing gas into the gas chamber via a gas inlet and gas outlet until the desired gas composition is achieved in the gas chamber and hermetically closing the gas inlets and outlets thereafter;
connecting the proton exchange membrane electrodes to a circuit comprising a current/voltage source;
applying a current/voltage to the proton exchange membrane electrodes; and measuring the electrodes performance.

According to an important feature of the present invention, the electrodes are located in a common gas chamber filled either with oxygen or hydrogen containing gas. Contrary to the conventional test cells where hydrogen and oxygen partial reactions take place, in the present test station, the partial reaction proceeding in the MEA is only one (hydrogen or oxygen), proceeding at the same rate (same current passing through the electrodes of the MEA) but in the opposite directions on both electrodes.

In the present method, the flow rate may be controlled by pumps situated on the cathode and the anode inlets of each cell. By varying the flow rates tests under different stoichiometrical coefficients of the reagents can be performed. The testing is however also possible under unique self-recirculating conditions where pumps and single cell hardwares are not required. In this case, a unique self-recirculating supply and removal of the reagents and products is performed.

In conventional PEM EHEC testing, the electrodes' performance strongly depends on the reagents flows and stoichiometrical coefficients of their supply. With the present method on the other hand, the electrochemical hydrogen or oxygen pumping is realized in a sealed gas volume. In such a sealed volume, an exchange of reagents and products between the electrodes takes place, thereby achieving a self-recirculating gas flow. The flow rates of the reagents and products are function of the applied electrical current, geometric electrode area, volume and shape of the gas chamber. By fixing the electrode geometrical area, size and shape of the gas chamber, the testing conditions (gas flows) of the gas diffusion electrodes are unique but strictly defined and easy reproducible (self-realizable). This is of a great importance for electrode performance comparison and qualifying.

In order to test one electrode (working electrode), at least one second electrode (counter electrode) is needed in order to apply a current/voltage between the two. In the present case, the two electrodes are gas diffusion electrodes and both are situated in the same gas chamber, i.e. they are exposed to the same environment. Thus, the experimental conditions are strictly defined and independent of gas crossovers, concentration and pressure gradients.

The counter electrode is not only used for passing a current/voltage to the working electrode, but additionally to supply reagents for the working electrode while consuming working electrode products. Thus, constant gas composition is established during testing, bringing significant testing benefits such as avoiding the need for external continuous gas supply to the tested electrodes and removal of the reaction products. Due to the equal amount of current passing through the working electrode and the counter electrode, the self-balance between the reagents and products (which may also be referred to as *"reagent recovery by products consumption"*) is achieved. This can be explained with the fact that the reagents for the working electrode are the products for the counter electrode (the same electrochemical reaction but in opposite directions proceeds on working electrode and counter electrode) and vice-versa and, during the test, reagents are produced at the same rate (determined by the current) as the products are consumed. Therefore, the geometrical area of working electrode and counter electrode can differ and this will not lead to change in the self-balance established between the reagents and products. Here, the working and counter electrodes are arbitrary depending on which reaction or electrode is of interest. If the counter electrode is made of corrosion-resistive support and catalyst or non-supported catalyst, e.g. pure metal. multi-metals, alloys and/or metal oxide catalyst such as Pt, Ir, IrOx, Ru etc. and their mixtures and/or alloys, the gas composition of the chamber gives information about the side reactions, PEM and electrodes electrochemical degradation, for instance carbon corrosion reaction, hydrogen peroxide generation, PEM degradation mechanisms and any other degradation processes. During and/or after the electrochemical tests, gas analysis of the testing atmosphere by taking a gas probe from the gas chamber can be performed.

Advantageously, the method comprises, prior to feeding hydrogen containing gas into the gas chamber, feeding inert gas to replace the ambient air atmosphere in the gas chamber. This procedure is used to eliminate the possibility of air and hydrogen explosive mixture formation in the presence of catalysts nanoparticles and electrodes ignition into the gas chamber and electrodes degradation.

The inert gas is preferably chosen from the group comprising Nitrogen, Argon, Helium. It should be noted that this list is however not exclusive.

According to an advantageous embodiment of the present invention, the present method comprises:
providing a test station with a first gas chamber and a second gas chamber therein;
feeding hydrogen containing gas into the first gas chamber; and feeding oxygen containing gas into the second gas chamber.

A dedicated gas chamber is thereby provided for hydrogen and oxygen testing respectively. Cross-contamination between test cycles can thereby be avoided.

Preferably, before measuring the electrodes performance, the adjusted gaseous content in the gas chambers, total gas pressure, temperature and relative humidity are allowed to reach their steady-state values.

Advantageously, the step of measuring electrode performance comprises at least one of steady state polarization (obtaining polarization curves), potentiostatic measurements, galvanostatic measurements, cycling voltammetry methods, current interrupt methods, ac resistance methods, electrochemical impedance methods.

Based on the measurement, electrode performance can be determined under various testing conditions and aging stages, quantification of the electrodes performance limitations (kinetic, ohmic - proton and electron resistance, diffusion), the electrochemically active surface area, the electrocatalyst activity, electrocatalyst utilization, the degradation rate of the electrodes as a function of the operating conditions and aging current or potential cycles. Additional information regarding the aging processes can be obtained via analyzing the chemical content of the gaseous atmosphere of the testing station chambers. The lack of externally supplied and exhaust gasses (tests are performed under sealed gaseous atmosphere) allows fast accumulation of the degradation products in high concentrations for precise and unambiguous detection and interpretation of the degradation processes as a function of the testing conditions and duration. The effect of accumulation of the degradation products on the MEAs and electrodes performance and degradation can be established. This is of a great importance for systems where water electrolyzers provide the reagents for the fuel cells. Based on the comprehensive results obtained conclusion for the most relevant and cost-effective strategies for MEAs, electrodes and cell hardware performance optimization can be drawn. The proposed testing cell can be used for testing and qualification of different cell hardwares and components by using the same type of MEA and comparing the electrochemical performance, e.g. polarization curve or ac impedance spectra (electronic conductivity of the cell hardware, gas diffusion limitations, proton conductivity of the MEA, reagents (including water) supply and removal.

Based on the polarization curves, ac impedance spectra, cyclic voltammetry, potentiostatic, amperostatic measurements, current/voltage cycling, etc. one can estimate and compare the electrochemical performance of different electrodes tested under identical working conditions (temperature, humidity, total pressure, concentration of the reagents and products), identical or different reagents flows for each MEA in the testing station determined either by the current passing through each of the MEA in the testing station (self-recirculating mode) or by pumps.

The linear slope in dimension [S.cm⁻²], dj/dU (j [A.cm⁻²] - current density and U [V] - cell voltage] of the polarization curve obtained in the hydrogen testing chamber at pure hydrogen is mostly the ohmic conductivity of the cell which includes the electronic and protonic conductivity of the cell. The electronic conductivity can be measured and extracted from the ohmic resistance by measuring the same cell with identical type of electrodes but without a membrane (PEM). Thus, the proton conductivity of the MEA can be obtained. The specific proton conductivity [S.cm⁻¹] can be obtained via multiplying the value in [S.cm⁻²] by the thickness of the membrane [cm].

The proposed method is ideal for high-pressure electrochemical measurements under increased safety since the electrodes of the same MEA are situated in the same gas compartment and there are no differential pressure and different gases on both sides of the MEA. Thus, the PEM is only a proton conductor but not a gas separator as in the case of the standard testing cells.

The method may be used for electrochemical characterization of MEAs with aged and/or separation failure of the PEM promoting mixing of the gases from the anode and the cathode through the MEA.

The present method may be used also for testing of the aged MEAs where the PEM breakage (separation properties failure) does not allow testing of the MEAs in PEM fuel cells, water electrolyzers or regenerative fuel cell testing hardwares. PEM breakage is the reason for a total performance failure of the above mentioned devices. Furthermore, the PEM breakage enables mixing of air (or oxygen) with hydrogen forming an explosive mixture in the presence of highly active nanosized electrocatalysts. Along with the safety issues, the mixing of the reactive gasses results in drastic change of the electrodes potentials, catalysed chemical burning of hydrogen and electrodes, thus does not allow performing of proper electrochemical measurements and obtaining data related to the electrochemical activity of the catalyst in the aged electrodes. Since in the proposed testing station the reactive atmosphere for both electrodes (Counter Electrode and Working Electrode) of the MEA is common (hydrogen containing gas or oxygen containing gas), the separation properties of PEM are not prerequisite for safety issues nor for obtaining a real (not disturbed by reagents mixing) electrochemical data. The electrochemical measurements of aged MEAs where there is a failure in PEM separation properties cannot be measured in the conventional testing devices but only in the proposed in this patent testing station.

MEAs testing prior their integration in fuel cell stacks, water electrolyzer stacks and unitized regenerative fuel cell stacks. The MEAs integration in the above mentioned stacks is expensive and time consuming procedure. Integration of even one defective MEA affects significantly the efficiency and durability of the stack. The detection of the defect MEA can be performed after operating the stack. The replacement of the defect MEAs is expensive and requires disassembling of the stack. If such a defective MEA can be identified before integration in the stacks, considerable time and cost savings can be achieved. Thus, the present test station may not only be used for "in situ" testing of gas diffusion electrodes, but also for express MEAs testing prior their integration in production devices such as fuel cells, water electrolyzers, unitized regenerative fuel cells, sensors, electrochemical hydrogen pumps, electrochemical oxygen pumps, etc. The electrochemical tests are performed in unique, absolutely defined, reproducible, self-sustainable experimental conditions. The tests are performed in the absence of gas crossovers, gas content gradients and pressure gradients.

In the hydrogen version of the test, the MEA goes out of the production line and enters in one of the chambers of the proposed testing cell. The cell chamber is hermetically sealed from the environment. Two porous current collectors are in contact with the two electrodes of the MEA. The air in the cell is changed to nitrogen. After that a short time, e.g. 1-2 second measurement of the current at externally applied, e.g. 0.1 V cell voltage is performed. The current obtained can give information on the electronic conductivity of the membrane or possible short-circuits of the electrodes of the MEA. Then a small (controlled, e.g. 1 %) amount of hydrogen is introduced in the cell in the presence of nitrogen. Again 0.1 V external voltage is applied and current is measured. The current will be significantly higher than this in nitrogen (H₂/H₂ cell is realized). The electrochemical performance of the MEAs can be compared by the amount of current passing through them. Then before opening the measuring cell, atmosphere is changed to nitrogen. If needed a small piece of Pt gas diffusion electrode can pressed on the membrane of the MEA and in the presence of hydrogen can be used as a reference hydrogen electrode. Thus, difference in performance of the cathode and the anode can be registered. This reference electrode should be attached to the membrane so measurement should be performed before framing of the MEA (the membrane of the MEA should be accessible).

In the air version of the test, the MEA goes out of the production line and enters in one of the chambers of the proposed testing cell. The cell chamber is hermetically sealed from the environment. Two porous current collectors are in contact with the two electrodes of the MEA. The gas compartment is filled with the ambient or synthetic air. For a certain short time, e.g. 1 - 5 s a cell voltage of e.g. U = E anode - E cathode ≤ 1.7 V (if we assume maximum anode potential of 2 V and minimum cathode potential of 0.3 V) is applied and the current is measured. It can be selected on which electrode of the MEA oxygen reduction reaction (ORR) and oxygen evolution reaction (OER) will proceed. The electrochemical performance of the MEAs can be compared by the amount of current passing through them. Then the air is changed to an inert gas (Nitrogen). After that a few seconds measurement of the current at cell voltage of 0.1 V is performed. The current obtained in the so called blocked electrodes can give information on the electronic conductivity of the membrane or possible short-circuits of the electrodes of the MEA. A reference hydrogen electrode may be attached to the membrane so measurement should be performed before framing of the MEA (the membrane of the MEA should be accessible). Testing and qualification of different cell hardwares and components by using the same type of MEA and comparing the electrochemical performance, e.g. polarization curve, ac impedance spectra, etc. for measuring the electronic conductivity of the cell hardware, gas diffusion limitations, proton conductivity of the MEA, reagents (including water) supply and removal flows, etc. influences on the electrodes and MEAs performance.

As mentioned above, a reference electrode is advantageously connected to the proton exchange membrane on its cathode and/or anode side. Such a reference electrode may be beneficial for measuring the individual electrode potentials, not only cell voltages. A voltmeter may be arranged between the reference electrode and a voltage sense circuit.

The reference electrode arranged within the second (oxygen containing) gas chamber is preferably sealed in a hydrogen environment.

The gas chambers are preferably provided with a water management device, in particular a Peltier element. Such a Peltier element is used to manage the humidity within the gas chamber, i.e. the amount of the water vapours in contact with the proton exchange membrane. Indeed, the proton conductivity of the proton exchange membrane is greatly influenced by the water content. The Peltier element has its cooler side in contact with a water soaked substrate within the gas chamber, while its warmer one is in contact with the chamber body of the test station.

Advantageously, the gas chamber comprises a plurality of cells, each having a proton exchange membrane sandwiched between two proton exchange membrane electrodes, wherein the electrodes of each cell are connected to a current/voltage source. The cells within one gas chamber may be tested under different current/voltage conditions, while maintaining identical gas environment. For saving electrochemical equipment resources (power sources, potentiostats, galvanostats, etc.) it is also possible that all or part of the MEAs in one or both of the chambers of the testing station are electrically connected in series to a common current/voltage source and individual cell voltages and/or electrode potentials vs. reference hydrogen electrode are measured via voltmeters (not shown in the figures). In this case, the same amount of current passes through all MEAs that are electrically connected in series. Thus, unless they are tested with pumps, the electrically connected in series MEAs are tested under equal reagents flows.

The benefit from the possibility to test various electrodes at the same time and in the same testing station under identical and / or various current/voltage conditions independently is a saving on the number of testing hardware, on testing time and costs. In order to simultaneously test various electrodes under various current/voltage and reagents flows conditions by conventional testing methods one would need separate testing hardware for at least each MEA and/or current/voltage condition.

It should be noted also that the current/voltage supplied to the cells by the current/voltage source may be either AC or DC.

The present method may also be used to test MEAs prior their integration in fuel cell stacks, water electrolyzer stacks and unitized regenerative fuel cell stacks. The MEAs integration in the above mentioned stacks is expensive and time consuming procedure. Integration of even one defective MEA affects significantly the efficiency and durability of the stack. The detection of the defect MEA can be performed after operating the stack. The replacement of the defect MEAs is expensive and requires disassembling of the stack. If such a defective MEA can be identified before integration in the stacks, considerable time and cost savings can be achieved.

Thus, the present test station may not only be used for "in situ" testing of gas diffusion electrodes, but also for express MEAs testing prior their integration in production devices such as fuel cells, water electrolyzers and unitized regenerative fuel cells. The electrochemical tests are performed in unique, absolutely defined, reproducible, self-sustainable experimental conditions. The tests are performed in the absence of gas crossovers, gas content gradients and pressure gradients.

Prior to feeding hydrogen containing gas, feeding inert gas (for example Nitrogen, Argon, Helium, etc.) to replace the ambient air atmosphere in the cell chamber. This procedure is compulsory to eliminate the possibility of air and hydrogen explosive mixture formation in the presence of catalysts nanoparticles and electrodes ignition. Furthermore, mixing of air and hydrogen may result in severe aging of the electrodes and non-reliable electrochemical data afterwards. Evacuation of ambient atmosphere via inert gas flow prior to oxygen containing gas supply in the oxygen-containing gas chamber is not required. The adjusted gaseous content in both chambers, total gas pressure, temperature and relative humidity should reach their steady-state values before starting the electrochemical measurements.

The present invention also proposes a test station for testing proton exchange membrane electrodes and membrane electrode assemblies, the test station comprises a chamber body with a gas chamber filled with hydrogen or oxygen containing gas. The gas chamber comprises at least one cell having a proton exchange membrane sandwiched between two proton exchange membrane electrodes, wherein the electrodes of each cell are connected to a current/voltage source via a power circuit. The current/voltage source can be common for all or part of the cells in one and/or both chambers or individual for each cell (MEA). The gas chamber comprises a gas inlet and a gas outlet designed for hermetically sealing the gas chamber.

Advantageously, the test station comprises a first gas chamber filled with hydrogen containing gas and a second gas chamber filled with oxygen containing gas. Each gas chamber comprises a gas inlet and a gas outlet designed for hermetically sealing the first and second gas chambers.

Some of the advantages of the present method and the present test station can be summarized as follows:
- Avoid the use of the conditioning, supplying/removing of the reagents/products running peripheries. The desired gas mixtures can be obtained directly in the test chamber where they are appropriately conditioned. Thus, no need of specific knowledge in the field of engineering and controlling of testing and conditioning stations and devices when testing the PEM electrodes in the proposed testing cell is required.
- In the testing in the absence of pumps situated in the cathode and the anode inlets of each cell, PEM electrodes testing proceeds under self-recirculating gas flows. By fixing the electrode geometrical area, size and shape of the gas chamber, the testing conditions (gas flows) of the gas diffusion electrodes are unique but strictly defined and easy reproducible (self-realizable). This is of a great importance for the electrodes performance comparison and qualifying.
- Widen the working conditions to non-standard ranges for evaluation and assessment purposes. The experiments can be carried out at any gas composition, pressure, humidity and temperature allowed by the membrane or the other constituents of the MEA. Due to the testing principle where the two electrodes of the MEA are situated in a common gas compartment, testing at high pressures is much easier and safer than in conventional testing cells.
- Simultaneously obtaining of electrochemical data for electrodes in fuel cell and electrolyzer modes.
- Easy accessible combinatorial approach by running in parallel larger quantities of electrodes and MEAs independently investigated under different or identical current/voltage load and reagents flow rates for longer periods of time without surveillance at precisely defined conditions.
- Possibilities for testing different cell hardware and components by using the same type of MEA under strictly defined and absolutely reproducible testing conditions.
- Facilitate the understanding of MEA degradation mechanisms under various experimental conditions by accumulation of the side reaction products during testing in the absence of externally supplied and exhaust gases.
- Facilitate the understanding of the influence of the accumulated side-reaction products on the electrochemical performance and durability of the MEA and PEM electrodes.
- Accurate and easy identification of the effects of the hydrogen and oxygen impurities on the electrode performance for establishment of the tolerant levels of the electrocatalysts under investigation.
- Offer studies on gas diffusion limitations and MEAs structural optimization by varying the circulation flow rate and/or partial pressure of the reactive gas realized by dilution with an inert gas (He, Ar, N etc.).
- Zero consumption of reactive gases.
- Less need of alarm sensors and detectors as the experiments proceed in absolute safety.
- Easy realizable but precise control of the working conditions (temperature, total gas pressure, gas composition, reactants partial pressures including water) which makes the present test station ideal for electrodes and cell hardware performance comparison and qualifying.
- Electrochemical testing of MEAs with aged and/or separation failure of the PEM. The tests are performed under absolute safety. Due to the mixing of the anode and the cathode gases through the PEM, such measurements are not possible (electrodes potentials are strongly influenced by the gas at which they are exposed) and even dangerous (air/oxygen and hydrogen explosion mixtures in the presence of highly active nanosized electrocatalysts) in the standard testing cells.
- Important cost reduction and resources saving in R&D laboratory.

### BRIEF DESCRIPTION OF THE DRAWINGS

The present invention will now be described, by way of example, with reference to the accompanying drawing, in which:

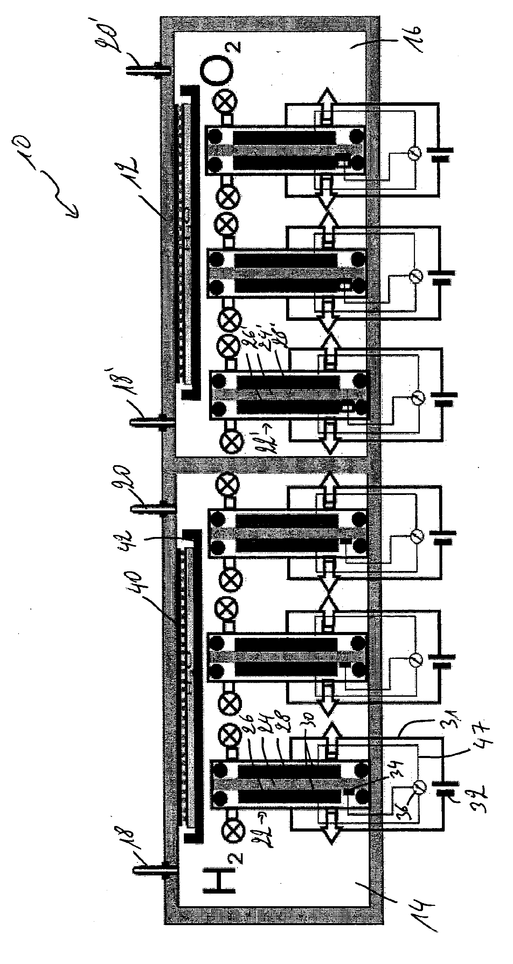

FIG. 1: is a schematic illustration of a test station according to the present invention.

### DETAILED DESCRIPTION OF PREFERRED EMBODIMENTS

A preferred embodiment of a test station 10 for electrochemical testing of proton exchange membrane electrodes (PEM electrodes) or membrane electrode assemblies (MEAs) is shown in Fig.1.

This test station 10 comprises a chamber body 12 within which two gas chambers 14, 16 are arranged. Each gas chamber 14, 16 is provided with a gas inlet 18, 18' and a gas outlet 20, 20'. The gas inlets and outlets 18, 18', 20, 20' are advantageously formed by needle valves in order to be able to control the precise amount of gas fed into and out of the gas chamber 14, 16.

The chambers 14, 16 contain an array of cells 22, each comprising a proton exchange membrane (PEM) 24 sandwiched between two PEM electrodes 26, 28, one acting as cathode 26, the other acting as anode 28. As is well known in the art, the PEM is permeable to protons but impermeable to electrons. Indeed, the PEM allows the transport of the protons from the anode to the cathode through the membrane but forces the electrons to travel around an electron conductive path to the cathode. A catalyst layer 30 is arranged between the membrane 24 and the electrodes 26, 28.

The cathode 26 and anode 28 are electrically linked via a power circuit 31 to an external current/voltage source 32 for feeding electrons from the anode 28 to the cathode 26.

A reference electrode 34 is furthermore connected to the membrane 24 on the cathode and/or anode side. The reference electrode 34 is preferably connected to the electrodes of the MEA via voltage sense circuit 47 comprising a voltmeter device 36.

The test station 10 is provided with an opening (not shown) in the chamber body 12 for passing cells 22 therethrough. Such an opening is used to introduce the cells into the gas chambers 14, 16 before the test and to remove them therefrom after the test. The opening may be dimensioned for the passage of only one cell or for the passage of an array of cells. In any case, the opening and its associated gate (not shown) are designed such that a hermetic seal is formed between the gate and the chamber body 12.

As is well known by the skilled person, water management is crucial for the performance of a MEA. Water content determines the proton conductivity, depending on the mode (fuel cell or water electrolyzer) can be reagent, product or can limit the gas transport and even change the proceeding electrochemical reactions. In the embodiment shown in Fig.1, water management is realized by incorporating a Peltier element 40 in each gas chamber 14, 16. Its cooler side is in contact with a water soaked substrate 42, while the warmer one is in contact with the chamber body 12. Thus, the lowest temperature inside the gas chamber 14, 16 (the cooler side of the Peltier) determines the water partial pressure.

A first gas chamber 14 is filled with a hydrogen containing gas. Prior to feeding hydrogen containing gas, inert gas (for example Nitrogen, Argon, Helium, etc.) is fed into the first gas chamber 14 to replace the ambient air atmosphere in the first gas chamber 14 in order to eliminate the possibility of air and hydrogen explosive mixture formation in the presence of catalysts nanoparticles and electrodes ignition. After the hydrogen containing gas has been fed into the first gas chamber 14, the first gas chamber 14 is hermetically sealed so as to maintain precise gas conditions within the chamber. The first gas chamber 14 is aimed for hydrogen electrodes testing. The anode 28 is a hydrogen electrode operating in fuel cell mode, while the cathode 26 is a hydrogen electrode operating in electrolyzer mode. The electrodes do not only pass a current between one another, but also exchange reagents. This ensures a constant concentration of reagents and products in the first gas chamber 14 during the measurement.

The positively charged anode 28, operating as a fuel cell anode, consumes hydrogen by oxidizing H₂ to protons and electrons by the so-called Hydrogen Oxidation Reaction (HOR). These protons reach the negatively charged cathode 26 and convert back to hydrogen gas by reduction of protons by the electrons via the so-called Hydrogen Evolution Reaction (HER). As a result, the hydrogen partial pressure is preserved constant (assuming that no side reactions occur) and remains equal to the initially adjusted in the first gas chamber 14 before the tests.

A second gas chamber 16 is filled with an oxygen containing gas. After the oxygen containing gas has been fed into the second gas chamber 16, latter is hermetically sealed so as to maintain precise gas conditions within the chamber. The second gas chamber 16 is aimed for oxygen electrodes testing. The anode 28' is an oxygen electrode operating in electrolyzer mode, while the cathode 26' is an oxygen electrode operating in fuel cell mode. Again, the electrodes do not only pass a current between one another, but also exchange reagents and products. This ensures a constant concentration of reagents and products in the second gas chamber 16 during the measurement.

The positively charged anode 28', operating as an electrolyzer anode, splits H₂O to protons, electrons and O₂ by the so-called Oxygen Evolution Reaction (OER). These protons, electrons and oxygen reach the negatively charged cathode 26' and convert back to H₂O by the so-called Oxygen Reduction Reaction (ORR). As a result, the oxygen and water partial pressures are preserved constant (assuming that no side reactions occur) and remains equal to the initially adjusted pressure in the second gas chamber 16 before the tests.

It should be noted that the reference electrode 34' in the second gas chamber 16 is sealed in a hydrogen environment.

The flow rate may be controlled by pumps (not shown) situated on the cathode and the anode inlets of each cell 22.

The testing is also possible under self-recirculating conditions where pumps and cell hardwares are not required. In this case, a self-recirculating supply and removal of the reagents and products is realized. In a conventional PEM EHEC testing, the electrodes' performance strongly depends on the reagents flows and stoichiometrical coefficients of their supply. In general, the higher are the reagents flows, the lower are the diffusion limitations and the higher is the gas diffusion electrodes' performance. In the case of PEM fuel cells, the higher are the reagents flows, the lower are the diffusion limitations, less likely is the electrode flooding (water blocking the gaseous reagents supply) and the higher is the gas diffusion electrodes' performance.

The electrochemical hydrogen or oxygen pumping is, according to the present invention, realized in a sealed gas volume. During the exchange of reagents and products between the anode and the cathode in the sealed volume, self-recirculating gas flows are realized. The flow rates of the reagents and products are function of the applied electrical current, geometric electrode area, volume and shape of the gas chambers. By fixing the electrode geometrical area, size and shape of the gas chamber, the testing conditions (gas flows) of the gas diffusion electrodes are unique but strictly defined and easily reproducible (self-realizable). This is of a great importance for the electrodes performance comparison and qualifying.

The present test station allows independent testing of each cell 22 under identical or different current/voltage loads and flow rates at self-maintained and constant activities of reagents and products adjusted before the experiment.

**REFERENCE NUMERALS**

| | | | |
|---|---|---|---|
| 10 | test station | 28, 28' | anode |
| 12 | chamber body | 30 | catalyst layer |
| 14, 16 | gas chamber | 31 | power circuit |
| 18, 18' | gas inlet | 32 | current/voltage source |
| 20, 20' | gas outlet | 34, 34' | reference electrode |
| 22, 22' | cell | 36 | voltmeter device |
| 24, 24' | proton exchange membrane | 40 | Peltier element |
| 26, 26' | cathode | 42 | water soaked substrate |
| 47 | voltage sense circuit | | |

## Claims

1. A method for testing proton exchange membrane electrodes and membrane electrode assemblies, said method comprising:
- providing a test station (10) having a chamber body (12) with a gas chamber (14, 16) therein;
- providing at least one cell (22, 22') having a proton exchange membrane (24, 24') sandwiched between two proton exchange membrane electrodes (26, 26', 28, 28');
- inserting at least one cell (22, 22') in said gas chamber (14, 16) through an opening in said chamber body (12);
- hermetically closing said opening in said chamber body (12);
- feeding hydrogen or oxygen containing gas into said gas chamber (14, 16) via a gas inlet (18, 18') and gas outlet (20, 20') until the desired gas composition is achieved in said gas chamber (14, 16) and hermetically closing said gas inlets and outlets (18, 18', 20, 20') thereafter;
- connecting said proton exchange membrane electrodes (26, 26', 28, 28') to a circuit (31) comprising a current/voltage source (32);
- applying a current to said proton exchange membrane electrodes (26, 26', 28, 28'); and
- measuring the electrodes performance.

2. The method according to claim 1, wherein, prior to feeding hydrogen containing gas into said gas chamber (14, 16), feeding inert gas to replace the ambient air atmosphere in the gas chamber (14, 16).

3. The method according to claim 2, wherein said inert gas is chosen from the group comprising Nitrogen, Argon, Helium.

4. The method according to any of the preceding claims, wherein said method comprises
- providing a test station (10) with a first gas chamber (14) and a second gas chamber (14) therein;
- feeding hydrogen containing gas into said first gas chamber (14);
- feeding oxygen containing gas into said second gas chamber (16)

5. The method according to any of the preceding claims, wherein, before measuring the electrodes performance, the adjusted gaseous content in said gas chambers (14, 16), total gas pressure, temperature and relative humidity are allowed to reach their steady-state values.

6. The method according to any of the preceding claims, wherein measuring the electrodes performance comprises at least one of steady state or quasi-steady state polarization (obtaining polarization curves), potentiostatic measurements, galvanostatic measurements, cycling voltammetry methods, current interrupt methods, ac resistance methods, electrochemical impedance methods.

7. The method according to any of the preceding claims, wherein a reference (34, 34') electrode is connected to the proton exchange membrane on its cathode and/or anode side.

8. The method according to claim 7, wherein said reference electrode (34, 34') is arranged in a hydrogen environment.

9. The method according to any of the preceding claims, wherein said gas chamber is provided with a water management device, in particular a Peltier element (40).

10. A test station for testing proton exchange membrane electrodes and membrane electrode assemblies, said test station (10) comprising a chamber body (12) with a gas chamber (14, 16) filled with hydrogen or oxygen containing gas, said gas chamber (14, 16) comprises at least one cell (22) having a proton exchange membrane (24, 24') sandwiched between two proton exchange membrane electrodes (26, 26', 28, 28'), wherein the electrodes (26, 26', 28, 28') of each cell (22) are connected to a current source (32) via a circuit (31)
wherein said gas chamber (14, 16) comprises a gas inlet (18, 18') and a gas outlet (20, 20'), designed for hermetically sealing said gas chamber (14, 16).

11. The test station according to claim 10, wherein said test station (10) comprises a first gas chamber (14) filled with hydrogen containing gas and a second gas chamber (16) filled with oxygen containing gas.

12. The test station according to any of claims 10 or 11, wherein a reference electrode (34, 34') is connected to said proton exchange membrane (24, 24') on its cathode and/or anode side, said reference electrode (34, 34') being connected to a voltage sense circuit (47).

13. The test station according to claim 12, wherein a voltmeter device (36) is arranged between said reference electrode (34, 34') and the voltage sense circuit (47).

14. The test station according to any of claims 10 to 13, wherein said first and second gas chambers (14, 16) each comprise a water management device, in particular, a Peltier element (40).

15. The test station according to any of claims 10 to 14, wherein said gas chamber (14, 16) comprises a plurality of cells (22), each having a proton exchange membrane (24, 24') sandwiched between two proton exchange membrane electrodes (26, 26', 28, 28'), wherein the electrodes (26, 26', 28, 28') of each cell (22) are connected to a current/voltage source (32).

16. Use of a test station according to any of claims 10 to 15 for testing proton exchange membrane electrodes.

17. Use of a test station according to any of claims 10 to 15 for testing membrane electrode assemblies.
